# EUROPEAN PATENT SPECIFICATION

(11) **EP 2 497 692 B1**
(45) Date of publication and mention of the grant of the patent: **06.03.2013**
(21) Application number: 11157203.8
(22) Date of filing: 07.03.2011
(51) Int. Cl.: B60R 21/017

(54) **An airbag control arrangement**
Airbagsteuerung
Commande pour airbag

(43) Date of publication of application: 12.09.2012
(73) Proprietor: Autoliv Development AB, 447 83 Vårgårda (SE)
(72) Inventor: Fouilleul, Antoine, 95320, Saint-Leu la Forêt (FR); Fitzpatrick, John, 78600, Maisons-Laffitte (FR)
(74) Representative: Parry, Simon James

(56) References cited:
- EP-A1- 0 314 114
- EP-A1- 0 838 374
- DE-A1- 4 016 644
- GB-A- 2 196 163
- GB-A- 2 280 772
- US-A- 5 995 891

## Description

The present invention relates to an airbag control arrangement for a motor vehicle. More particularly, the invention relates to an airbag control arrangement specifically configured for a steering-wheel mounted airbag in a motor vehicle having a steering-wheel mounted function switch such as, for example, a horn switch.

It is now widely known to provide inflatable airbags within the cabins of motor vehicles, the airbags being arranged for rapid inflation in the event of a collision in order to provide protection to the driver and/or passengers of the vehicle. Typical airbags provided to protect the driver of a motor vehicle include a steering-wheel mounted module having a tightly packaged airbag and an inflator for rapidly dispensing inflating gas into the airbag. The airbag module is also associated with a control circuit which is configured to sense a collision and issue an appropriate actuating signal to actuate the inflator and hence inflate the airbag in the event of a collision. Typically, conventional control circuits for such airbag modules comprise one or more acceleration sensors positioned on the vehicle chassis, and a controller which is also typically positioned on the vehicle chassis.

It is considered advantageous to be able to provide the airbag control circuit, or at least a substantial part of it, within the airbag module as a single unit, or at least on the steering wheel itself rather than the chassis. If this can be achieved then it simplifies assembly of the vehicle and reduces the complexity of the vehicle's wiring loom, and hence also reduces cost.

It has therefore been proposed previously to provide airbag control arrangements having a control circuit mounted to the steering wheel and electrically connected to the horn-circuit of the vehicle via a steering-wheel mounted horn switch in order to derive operative electrical power from the horn circuit. In this regard, it is to be appreciated that the horn-switch of such a vehicle is generally electrically connected to the other components of the horn-circuit via a conductive slip-ring or clock-spring arrangement at the interface between the steering wheel and the steering column in order to ensure continuous electrical connection during rotation of the steering wheel.

EP 314114 discloses an airbag control arrangement with a circuit derivating its power from the horn circuit to the vehicle's steering wheel, the circuit switching from a sleep mode to an operative mode.

However, previously proposed control arrangements of this general type draw current from the horn circuit continuously. This makes them unsuitable for use in vehicles in which the horn circuit is continuously connected to the vehicle battery rather than being connected via the vehicle's ignition switch, as they will drain the battery when the car is not in use.

It is therefore an object of the present invention to provide an improved airbag control arrangement for a steering wheel mounted airbag.

According to the present invention, there is provided an airbag control arrangement for a steering-wheel mounted airbag in a motor vehicle having a steering-wheel mounted function switch, the arrangement comprising: an airbag control circuit mounted to the steering wheel and including a first acceleration sensor, a second acceleration sensor, and a controller; the airbag control circuit being electrically connected to an auxiliary function circuit incorporating said function switch so as to derive operative electric power from the auxiliary function circuit, wherein the controller is configured to output an actuating signal only in response to the receipt of signals from both acceleration sensors, and the airbag control circuit is configured to switch from a sleep mode to an operative mode in dependence on an output signal from the first acceleration sensor; the second acceleration sensor being switched off and the controller drawing a low sleep-current in said sleep mode, but both being energised and operable in said operative mode.

Advantageously, the airbag control circuit is configured to switch from said sleep mode to said operative mode in response to an output signal from the first acceleration sensor representative of an acceleration in excess of a first predetermined threshold.

Conveniently, the controller is configured for operation in said operative mode to output said actuating signal in response to the receipt of a signal from the second sensor indicative of a sensed acceleration in excess of a second threshold.

Preferably, the airbag control circuit is configured to return to said sleep mode from said operative mode after a predetermined period of time.

Advantageously, the airbag control circuit is configured also to switch from said sleep mode to said operative mode at regular time intervals for diagnostic purposes.

Conveniently, switching between said sleep and operative modes is controlled by said controller.

Preferably said auxiliary function circuit is a horn circuit, and said function switch is a horn switch operable to sound the horn of the vehicle.

Advantageously, said airbag control circuit further comprises a rechargeable energy reserve arranged and configured to charge from said auxiliary function circuit.

Conveniently, said energy reserve comprises a capacitor.

Preferably, the first acceleration sensor is configured to draw a lower current than the second acceleration sensor.

Advantageously, the first acceleration sensor is configured to draw a current of 100 pA or less.

Conveniently, the first acceleration sensor comprises a piezoelectric accelerometer.

Preferably, the first acceleration sensor is a passive sensor.

Advantageously, the second acceleration sensor comprises a micro-electro-mechanical accelerometer.

Conveniently, said auxiliary function circuit is electrically connected to a primary source of electrical energy provided within the vehicle.

Preferably, said primary source of electrical energy is the vehicle battery.

So that the invention may be more readily understood, and so that further features thereof may be appreciated, embodiments of the invention will now be described by way of example with reference to the accompanying drawings in which:
Figure 1 is a schematic illustration showing a steering-wheel mounted airbag unit associated with a conventional horn-circuit;
Figure 2 is a schematic illustration showing the horn circuit in more detail; and
Figure 3 is a schematic circuit diagram showing an airbag control arrangement in accordance with an embodiment of the present invention.

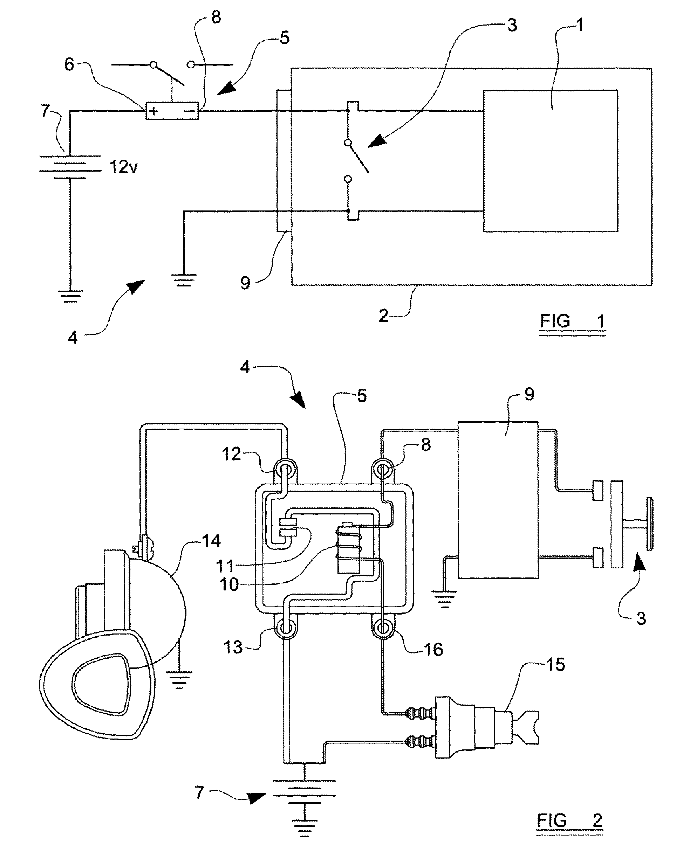

Figure 1 depicts in schematic form a driver's airbag unit 1 which includes an airbag control circuit and which is mounted to the steering wheel 2 of a motor vehicle. The steering wheel 2 is mounted to a steering column of the vehicle (not shown) for rotation in a conventional manner. A function switch 3 is mounted to the steering wheel 2 and forms part of an auxiliary function circuit 4.

The auxiliary function circuit 4 can take various forms. For example, the auxiliary function circuit may form part of the vehicle's entertainment system, in which case the function switch 3 may take the form of a volume control button or a radio tuning button or the like. Alternatively, the auxiliary function circuit 4 may form part of the vehicle's cruise-control system, in which case the function switch 3 may take the form of a cruise-control activation button, speed-control button or the like. However, in preferred embodiments of the present invention the auxiliary function circuit 4 represents the horn circuit of the vehicle, with the function switch 3 being the horn activation switch. Typically, the horn activation switch 3 will be provided between the central hub portion of the steering wheel frame and a floating housing containing the airbag module 1 such that the switch is closed when the driver presses the housing towards the hub of the steering wheel frame. However in other arrangements the horn switch 3 may simply take the form of a button positioned, for example, on a spoke of the steering wheel.

In the particular case of the horn circuit 4 illustrated in figure 1, the circuit comprises a horn relay 5. A first terminal 6 of the horn relay 5 is connected to the positive terminal of the vehicle battery 7. A second terminal 8 of the horn relay 5 is connected to the horn switch 3 via a clock spring or slip ring arrangement of a type known *per* se, as illustrated schematically at 9 in figure 1. The clock spring or slip-ring arrangement 9 is provided to ensure that the horn switch 3 on the steering wheel remains electrically connected to the rest of the horn circuit 4 during rotation of the steering wheel 2.

Figure 2 illustrates the horn circuit 4 and in particular the horn relay 5 in more detail. The horn relay 5 comprises a relay coil 10 electrically connected between the two terminals 6, 8. The horn relay 5 further comprises a pair of relay contacts 11 arranged adjacent the coil 10 and arranged to be closed (i.e. electrically connected to one another) upon energisation of the coil 10 in a known manner. The contacts 11 are electrically connected between two further terminals 12, 13 on the horn relay 5. A first of these terminals 12 is electrically connected to a horn 14, and the other terminal 13 is electrically connected to the positive terminal of the vehicle battery 7.

As will be appreciated, and indeed as is conventional, closure of the horn switch 3 is effective to energise the coil 10 which in turn closes the contacts 11, thereby electrically connecting the horn to the battery 7 and thus sounding the horn.

The horn circuit 4 illustrated in figure 2 is configured so as only to be connected to the vehicle battery 7 when the vehicle's main ignition switch 15 is closed, for example by a key. Thus, the ignition switch 15 is connected between the first terminal 6 of the horn relay 5 and the vehicle's battery 7. When the ignition switch is open (i.e. in an "off" condition), no current will flow through the horn circuit, and most notably no current will flow through the clock-spring or slip-ring arrangement 9 to the steering wheel 2.

It should be appreciated, however, that whilst the airbag control arrangement of the present invention is suitable for use in vehicles having an auxiliary function circuit such as the horn circuit 4 wired to the ignition switch 15, it is also suitable for use in vehicles having an auxiliary function circuit which is not wired to the ignition switch and which is instead permanently connected to the battery 7. Indeed, as will become clear from the following description, the airbag control arrangement of the present invention provides certain advantages that make it particularly suitable for use in association with an auxiliary function circuit 4 which is not wired to the main ignition switch.

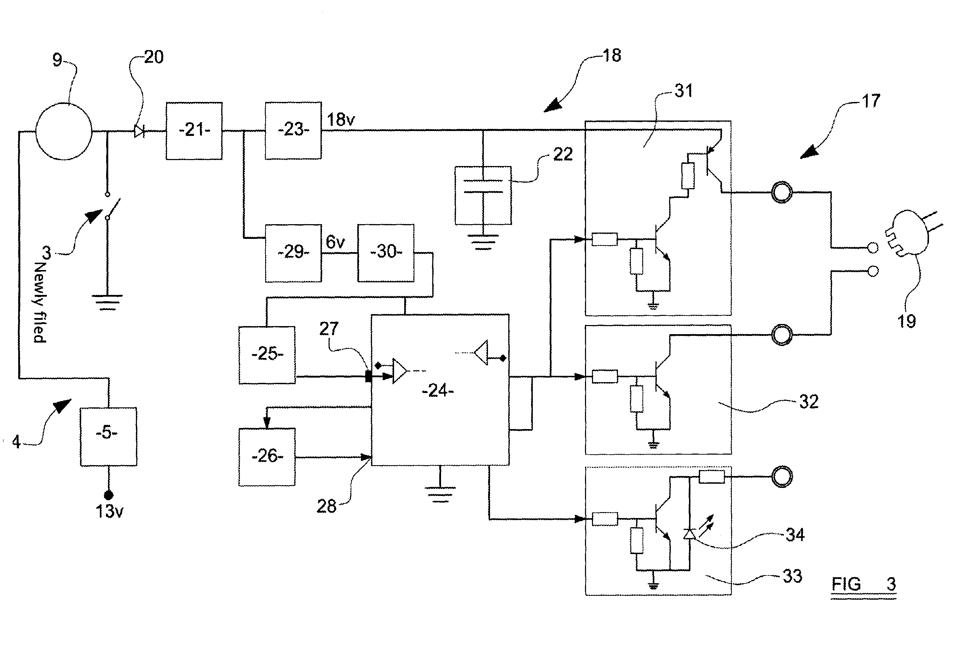

Turning now to consider figure 3, the horn circuit 4 is shown in combination with an airbag control arrangement 17 in accordance with an embodiment of the present invention. The airbag control arrangement 17 comprises an airbag control circuit 18 which is connected between the horn-circuit 4 and an actuating squib 19. The actuating squib is configured to fire an inflator (not shown) to inflate the airbag (not shown) upon receipt of an actuating signal from the airbag control circuit 18.

The airbag control circuit 18 is electrically connected to the horn circuit 4, via the horn-switch 3, and is thus arranged to derive its operative electric power from the horn circuit 4.

The airbag control circuit 18 comprises a blocking diode 20 and a current-limiting resistor 21 connected in series to the horn switch 3. The circuit further comprises a rechargeable energy reserve 22 which is connected in series with the resistor 21 and the blocking diode 20 via a step-up voltage converter 23 which is preferably configured to convert an input voltage of approximately 13V to an output voltage of approximately 18V. The energy reserve 22 may comprise a low impedance capacitor, preferably having a very low leakage current. However, the energy reserve 22 could alternatively be provided in the form of a rechargeable battery, such as a NiCad battery. The energy reserve is maintained in a charged condition by current from the vehicle battery 7 which flows through the horn relay 5, the slip ring/clock spring 9, diode 20, resistor 21 and voltage converter 23. As will be appreciated, in the preferred embodiment in which the energy reserve is provided in the form of a capacitor, the capacitor is charged to the output voltage of the voltage converter 23.

In the event that the horn-switch 3 is closed, the charging current passing through the resistor 21 will be momentarily interrupted. The blocking diode 20 thus serves to prevent depletion of the energy stored in the reserve 22 upon actuation of the vehicle's horn. The blocking diode 20 thus ensures that operation of the horn circuit 4 is independent of the operation of the airbag control circuit 18 and, *vice-versa,* the airbag control circuit 18 simply deriving operative power from the horn circuit 4.

The airbag control circuit 4 further comprises a controller 24 and first and second sensors 25, 26, each sensor being responsive to acceleration and connected to a respective input terminal 27, 28 of the controller so as to provide a respective output signal representative of a sensed acceleration value to the controller.

The controller 24 is preferably provided in the form of a so-called microcontroller and comprises an Electrically Erasable Programmable Read-Only Memory ("EEPROM") of a type known *per* se. The controller is electrically connected in series with the resistor 21 via a step-down voltage converter 29 and a voltage regulator 30. The step-down voltage converter is preferably configured to convert an input voltage of 13V to an output voltage of 6V.

The first sensor 25 is configured so as to draw a significantly lower current than the second sensor 26, and is preferably configured to draw a current of only 100 pA or less. In preferred embodiments of the invention the first sensor 25 is a passive sensor, and is most preferably provided in the form of a piezoelectric accelerometer.

The first sensor 25 is connected directly to the voltage regulator 30 and so is arranged to receive on input current from the horn circuit 4 via the diode 20 and the resistor 21. The horn circuit 4 thus supplies current to the first sensor 25 as long as the horn is not activated by closure of the horn switch 3. When the horn-switch 3 is closed to activate the horn, then the current to power the sensor 25 is instead provided by the energy reserve 22 which is configured to supply several minutes' worth of power under such conditions. As will be appreciated, in the event that the horn circuit 4 is wired to the ignition switch 15 of the vehicle, then the supply of current to the sensor 25 from the horn-circuit 4 is cut-off when the ignition switch is open (i.e. the vehicle is switched off). Under these circumstances the vehicle may remain unused for a considerable length of time, thereby depleting the energy reserve 22. Of course, this does not present a problem, because the airbag control arrangement will only be required to operate when the vehicle is in use, and the energy reserve will be quickly recharged when the vehicle's ignition is next switched on. However, in the event that the horn-circuit 4 is not wired to the ignition switch 15, then the airbag control circuit 18 will not be isolated from the vehicle battery 7 when the vehicle is switched off at the ignition switch. In this situation, the first sensor 25 will continuously draw current from the vehicle's battery 7 via the horn circuit 4. It is for this reason that the first sensor 25 is a low current sensor, and preferably a passive sensor; to ensure that it does not place a significant drain on the vehicle battery.

The second sensor 26 is preferably provided in the form of a micro-electrical-mechanical (MEMS-type) accelerometer and is arranged to receive its operative power from the controller 24 rather than directly from the horn-circuit as in the case of the first sensor 25.

The airbag control circuit 18 further comprises a pair of firing sub-circuits, namely a first firing circuit 31 and a second firing circuit 32. Both firing circuits 31, 32 are arranged to receive an input signal from the controller 24 and are connected to respective terminals of the actuating squib 19. The first firing circuit is additionally directly connected to the energy reserve 22 in order to provide sufficient electrical power to fire the squib 19.

Additionally, the controller 24 is also connected to a warning circuit 33 comprising a warning lamp such as a light-emitting diode 34.

The airbag control circuit 18 is configured so as to have two main states or modes; namely a sleep mode and an operational mode, with switching between the two modes being controlled by the controller 24. The control circuit 18 will usually be in its sleep mode and, as will be described in more detail below, will only usually be switched from that mode to the operational mode either i) in response to a signal from the first sensor 25, or ii) for periodic diagnostic purposes.

In the sleep mode, the controller 24 draws only a very low sleep-current (preferably approximately 15 pA) and the second acceleration sensor 26 is switched off so as not to draw any current.

In the event that the first sensor is subjected to an acceleration, for example as a result of a possible accident situation or even simply as a result of movement of the steering wheel, it will produce a signal which is passed to the first input 27 of the controller 24. If the signal from the first sensor 25 is below a first predetermined threshold value stored in the memory of the controller 24, then no change of state will occur and the circuit 18 will remain in its sleep mode. However, the controller is configured to power up from its initial sleep mode upon receipt of a signal from the first sensor exceeding the first predetermined threshold value. Thus, if such a signal is passed to the controller 24 from the first sensor 25, the controller will become active, and under such conditions is configured to pass current to the second acceleration sensor 26 thereby switching the sensor on. The airbag control circuit 18 is thus configured to switch from its initial sleep mode to the aforementioned operational mode in response to a signal from the first sensor in excess of the first predetermined threshold value. In preferred embodiments it is proposed to set the first predetermined threshold value at a level representative of normal accelerations imparted to the steering wheel during normal driving conditions. Thus, the signal will only exceed the threshold value if very high accelerations are imparted to the steering wheel, for example as a result of violent steering inputs from the driver or a possible accident involving the vehicle.

The controller 24 is configured to remain in its operational mode, and thus supplying current to the second acceleration sensor, for a predetermined time period. In preferred embodiments, this time period is of the order of a few milliseconds, but it is also envisaged it could alternatively be minutes or even hours.

The second acceleration sensor 26 will produce a signal representative of accelerations detected by the sensor, and as explained above, this signal is passed to the second input 28 terminal of the controller 24. If the signal from the second sensor is below a second threshold value stored in the memory of the controller 24, no further processing is performed and the control circuit 18 will simply return to its sleep mode at the end of the predetermined time period (assuming that no other signals from the second sensor 26 in excess of the second predetermined threshold are detected in the meantime). However, if the signal from the second sensor 26 exceeds the second threshold value, then the controller will issue a firing signal to each of the firing sub-circuits 31, 32, thereby initiating actuation of the airbag via the squib 19. As will be appreciated from the foregoing description of the sub-circuits 31, 32, the first firing circuit 31 is arranged to trigger the squib 19 using stored energy in the energy reserve 22. This ensures that actuation of the squib 19 is independent of the position of the horn switch 2. This is important because of course it is not uncommon for the driver of a motor vehicle to sound the vehicle's horn in anticipation of a possible accident and so the horn can be in operation at the point of impact when the airbag is required to be inflated.

The two-sensor configuration of the control arrangement of the present invention offers significant advantages over prior art arrangements. The first sensor effectively serves as a "wake-up" or "arming" sensor, the main purpose of which is to switch the control circuit 18 from a low current sleep mode, to a powered-up active mode in response to detected accelerations. The fact that the first sensor 25 is relatively low in its current demand means that the circuit 18 as a whole does not drain the vehicle's battery 7 when in its sleep mode, thereby allowing the arrangement to be used in a vehicle whose horn circuit 4 is not wired to the ignition switch.

Secondly, the fact that respective signals in excess of threshold values from two discrete acceleration sensors 25, 26 are required in order to actuate the firing circuits 31, 32 means that the airbag control circuit has an importing safing function preventing unnecessary inflation of the airbag in the event of a spurious signal from a single sensor or an acceleration not associated with an accident situation.

As indicated above, the controller 24 may be configured periodically to switch the control circuit from its sleep mode to its operational mode for diagnostic purposes. Most standard airbag control circuits are configured to perform diagnostics on their sensors when the circuits are initially powered-up on vehicle start-up. In such arrangements, a test pulse is applied to an auxiliary electrode of each sensor and the response of the sensor is analysed by the controller, this being done each time the vehicle is started so as to avoid possible confusion between an output signal from diagnosis and an output signal representative of an accident. However, in the present arrangement, because it can be installed in a manner in which the control circuit 18 is not entirely switched off when the vehicle is not in use, an alternative diagnostic regime is required in order to avoid confusion between outputs from the sensors in response to diagnosis and outputs representative of possible accidents requiring actuation of the airbag.

It is proposed to achieve this by making each sensor 25, 26 a dual-axis sensor arranged such that each sensitivity axis of the sensor makes an angle of 45 degrees to the principal vehicle axis along which the sensor is arranged to detect accelerations. With the sensor arranged in this manner, the acceleration value along the principal vehicle axis is calculated as the difference between the signals from the sensor along each of its sensitivity axes. To perform a diagnostic test of the sensor, the controller 24 switches the circuit 18 from its sleep mode to its operational mode in accordance with a time period regime held in the memory of the controller 24. Once the circuit is in its operational mode, the controller 24 applies a test pulse to an auxiliary electrode of each sensor. A positive result of the test will be an equal response signal from each sensitivity axis of the sensor, meaning that the difference between the two signals will be zero and thus easily differentiated from an operational response from a detected acceleration.

In the event that a diagnostic test run in accordance with the above-described regime fails to generate the appropriate test signals from either sensor, the controller 24 will issue an error signal to the warning circuit 33, thereby activating the warning lamp 34 to alert the driver of a problem requiring technical assistance. In the event that the diagnostic test generates the anticipated signals from the two sensors, then the controller 24 will switch the circuit 18 back to its sleep mode.

When used in this specification and claims, the terms "comprises" and "comprising" and variations thereof mean that the specified features, steps or integers are included. The terms are not to be interpreted to exclude the presence of other features, steps or integers.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. An airbag control arrangement (17) for a steering-wheel (2) mounted airbag in a motor vehicle having a steering-wheel (2) mounted function switch (3), the arrangement (17) comprising: an airbag control circuit (18) mounted to the steering wheel (2) and including a first acceleration sensor (25), a second acceleration sensor (26), and a controller (24); the airbag control circuit (18) being electrically connected to an auxiliary function circuit (4) incorporating said function switch (3) so as to derive operative electric power from the auxiliary function circuit (4), the arrangement being **characterised in that** the controller (24) is configured to output an actuating signal only in response to the receipt of signals from both acceleration sensors (25,26), and wherein the airbag control circuit (18) is configured to switch from a sleep mode to an operative mode in dependence on an output signal from the first acceleration sensor (25); the second acceleration sensor (26) being switched off and the controller (24) drawing a low sleep-current in said sleep mode, but both being energised and operable in said operative mode.

2. An airbag control arrangement according to claim 1, wherein the airbag control circuit (18) is configured to switch from said sleep mode to said operative mode in response to an output signal from the first acceleration sensor (25) representative of an acceleration in excess of a first predetermined threshold.

3. An airbag control arrangement according to claim 1 or claim 2, wherein the controller (24) is configured for operation in said operative mode to output said actuating signal in response to the receipt of a signal from the second sensor (26) indicative of a sensed acceleration in excess of a second threshold.

4. An airbag control arrangement according to any one of claims 1 to 3, wherein the airbag control circuit (18) is configured to return to said sleep mode from said operative mode after a predetermined period of time.

5. An airbag control arrangement according to any one of claims 1 to 4, wherein the airbag control circuit (18) is configured also to switch from said sleep mode to said operative mode at regular time intervals for diagnostic purposes.

6. An airbag control arrangement according to any one of claims 1 to 5, wherein switching between said sleep and operative modes is controlled by said controller (24).

7. An airbag control arrangement according to any preceding claim, wherein said auxiliary function circuit (4) is a horn circuit, and said function switch (3) is a horn switch operable to sound the horn (14) of the vehicle.

8. An airbag control arrangement according to any preceding claim, wherein said airbag control circuit (18) further comprises a rechargeable energy reserve (22) arranged and configured to charge from said auxiliary function circuit (4).

9. An airbag control arrangement according to claim 8, wherein said energy reserve (22) comprises a capacitor.

10. An airbag control arrangement according to any preceding claim, wherein the first acceleration sensor (25) is configured to draw a lower current than the second acceleration sensor (26).

11. An airbag control arrangement according to any preceding claim, wherein the first acceleration sensor (25) is configured to draw a current of 100 µA or less.

12. An airbag control arrangement according to any preceding claim, wherein the first acceleration sensor (25) comprises a piezoelectric accelerometer.

13. An airbag control arrangement according to any preceding claim, wherein the first acceleration sensor (25) is a passive sensor.

14. An airbag control arrangement according to any preceding claim, wherein the second acceleration sensor (26) comprises a micro-electro-mechanical accelerometer.

15. An airbag control arrangement according to any preceding claim, wherein said auxiliary function circuit (4) is electrically connected to a primary source (7) of electrical energy provided within the vehicle.

## Patentansprüche

1. Airbag-Steueranordnung (17) für einen an einem Lenkrad (2) angebrachten Airbag in einem Kraftfahrzeug mit einem an einem Lenkrad (2) angebrachten Funktionsschalter (3), wobei die Anordnung (17) Folgendes umfasst: einen Airbag-Steuerschaltkreis (18), der an dem Lenkrad (2) angebracht ist und einen ersten Beschleunigungssensor (25), einen zweiten Beschleunigungssensor (26) und eine Steuervorrichtung (24) umfasst; wobei der Airbag-Steuerschaltkreis (18) elektrisch mit einem Hilfsfunktionsschaltkreis (4) verbunden ist, die den Funktionsschalter (3) umfasst, um eine elektrische Betriebsspannung von dem Hilfsfunktionsschaltkreis (4) zu erhalten, wobei die Anordnung **dadurch gekennzeichnet ist, dass** die Steuervorrichtung (24) ausgebildet ist, um ein Betätigungssignal nur in Reaktion auf das Empfangen von Signalen von beiden Beschleunigungssensoren (25, 26) auszusenden, und wobei der Airbag-Steuerschaltkreis (18) ausgebildet ist, um in Abhängigkeit von einem Ausgangssignal des ersten Beschleunigungssensors (25) aus einem Ruhemodus in einen Betriebsmodus zu wechseln; wobei in dem Ruhemodus der zweite Beschleunigungssensor (26) ausgeschaltet ist und die Steuervorrichtung (24) eine geringe Ruhestromentnahme aufweist, aber beide im Betriebsmodus mit Strom versorgt und betriebsbereit sind.

2. Airbag-Steueranordnung nach Anspruch 1, worin der Airbag-Steuerschaltkreis (18) ausgebildet ist, um in Reaktion auf ein Ausgangssignal des ersten Beschleunigungssensors (25), das eine Beschleunigung anzeigt, die über einem ersten vorbestimmten Schwellenwert liegt, aus dem Ruhemodus in den Betriebsmodus zu wechseln.

3. Airbag-Steueranordnung nach Anspruch 1 oder 2, worin die Steuervorrichtung (24) für den Betrieb in dem Betriebsmodus ausgebildet ist, um das Betätigungssignal in Reaktion auf den Empfang eines Signals von dem zweiten Sensor (26) auszugeben, das eine abgefühlte Beschleunigung anzeigt, die über einem zweiten Schwellenwert liegt.

4. Airbag-Steueranordnung nach einem der Ansprüche 1 bis 3, worin der Airbag-Steuerschaltkreis (18) ausgebildet ist, um aus dem Betriebsmodus nach einer vorbestimmten Zeit wieder in den Ruhemodus überzugehen.

5. Airbag-Steueranordnung nach einem der Ansprüche 1 bis 4, worin der Airbag-Steuerschaltkreis (18) ausgebildet ist, auch zu Überprüfungszwecken in regelmäßigen zeitlichen Abständen aus dem Ruhemodus in den Betriebsmodus zu wechseln.

6. Airbag-Steueranordnung nach einem der Ansprüche 1 bis 5, worin der Wechsel zwischen dem Ruhe- und dem Betriebsmodus durch die Steuervorrichtung (24) gesteuert wird.

7. Airbag-Steueranordnung nach einem der vorangegangenen Ansprüche, worin der Hilfsfunktionsschaltkreis (4) ein Hupenschaltkreis ist und der Funktionsschalter (3) ein Hupenschalter ist, der betätigbar ist, um die Hupe (14) des Fahrzeugs zu betätigen.

8. Airbag-Steueranordnung nach einem der vorangegangenen Ansprüche, worin der Airbag-Steuerschaltkreis (18) ferner eine wiederaufladbare Energiereserve (22) umfasst, die angeordnet und ausgebildet ist, um durch den Hilfsfunktionsschaltkreis (4) geladen zu werden.

9. Airbag-Steueranordnung nach Anspruch 8, worin die Energiereserve (22) einen Kondensator umfasst.

10. Airbag-Steueranordnung nach einem der vorangegangenen Ansprüche, worin der erste Beschleunigungssensor (25) so ausgebildet ist, dass er weniger Strom entnimmt als der zweite Beschleunigungssensor (26).

11. Airbag-Steueranordnung nach einem der vorangegangenen Ansprüche, worin der erste Beschleunigungssensor (25) ausgebildet ist, um einen Strom von 100 µA oder weniger zu entnehmen.

12. Airbag-Steueranordnung nach einem der vorangegangenen Ansprüche, worin der Beschleunigungssensor (25) einen piezoelektrischen Beschleunigungsmesser umfasst.

13. Airbag-Steueranordnung nach einem der vorangegangenen Ansprüche, worin der erste Beschleunigungssensor (25) ein passiver Sensor ist.

14. Airbag-Steueranordnung nach einem der vorangegangenen Ansprüche, worin der zweite Beschleunigungssensor (26) einen mikroelektromechanischen Beschleunigungsmesser umfasst.

15. Airbag-Steueranordnung nach einem der vorangegangenen Ansprüche, worin der Hilfsfunktionsschaltkreis (4) elektrisch an eine Hauptquelle (7) für elektrische Energie angeschlossen ist, die in dem Fahrzeug bereitgestellt ist.

## Revendications

1. Agencement de commande de coussin d'air (17) pour un coussin d'air installé dans le volant (2) dans un véhicule moteur muni d'un commutateur de fonction (3) monté sur le volant (2), l'agencement (17) comprenant : un circuit de commande de coussin d'air (18) monté sur le volant (2) et incluant un premier capteur d'accélération (25), un deuxième capteur d'accélération (26) et un dispositif de commande (24) ; le circuit de commande de coussin d'air (18) étant électriquement connecté à un circuit de fonction auxiliaire (4) incorporant ledit commutateur de fonction (3) de manière à dériver une puissance électrique fonctionnelle du circuit de fonction auxiliaire (4), l'agencement étant **caractérisé en ce que** le dispositif de commande (24) est configuré pour émettre un signal d'actionnement seulement en réponse à la réception de signaux des deux capteurs d'accélération (25, 26), et où le circuit de commande de coussin d'air (18) est configuré pour commuter d'un mode de veille à un mode fonctionnel en fonction d'un signal de sortie du premier capteur d'accélération (25) ; le deuxième capteur d'accélération (26) étant mis hors service et le dispositif de commande (24) utilisant un courant de veille bas dans ledit mode de veille, mais les deux étant excités et actionnables dans ledit mode fonctionnel.

2. Agencement de commande de coussin d'air selon la revendication 1, dans lequel le circuit de commande de coussin d'air (18) est configuré pour commuter dudit mode de veille audit mode fonctionnel en réponse à un signal de sortie du premier capteur d'accélération (25) représentatif d'une accélération dépassant un premier seuil prédéterminé.

3. Agencement de commande de coussin d'air selon la revendication 1 ou la revendication 2, dans lequel le dispositif de commande (24) est configuré pour le fonctionnement dans ledit mode fonctionnel pour émettre ledit signal d'actionnement en réponse à la réception d'un signal du deuxième capteur (26) indicatif d'une accélération détectée dépassant un deuxième seuil.

4. Agencement de commande de coussin d'air selon l'une des revendications 1 à 3, dans lequel le circuit de commande de coussin d'air (18) est configuré pour revenir audit mode de veille depuis ledit mode fonctionnel après une période de temps prédéterminée.

5. Agencement de commande de coussin d'air selon l'une quelconque des revendications 1 à 4, dans lequel le circuit de commande de coussin d'air (18) est configuré également pour commuter dudit mode de veuille audit mode fonctionnel à des intervalles de temps réguliers à des fins de diagnostic.

6. Agencement de commande de coussin d'air selon l'une quelconque des revendications 1 à 5, dans lequel la commutation entre lesdits modes de veille et fonctionnel est commandée par ledit dispositif de commande (24).

7. Agencement de commande de coussin d'air selon l'une quelconque des revendications précédentes, dans lequel ledit circuit de fonction auxiliaire (4) est un circuit avertisseur, et ledit commutateur de fonction (3) est un commutateur d'avertisseur apte à actionner l'avertisseur (14) du véhicule.

8. Agencement de commande de coussin d'air selon l'une quelconque des revendications précédentes, dans lequel ledit circuit de commande de coussin d'air (18) comprend en outre une réserve d'énergie rechargeable (22) agencé et configuré pour charger depuis ledit circuit de fonction auxiliaire (4).

9. Agencement de commande de coussin d'air selon la revendication 8, dans lequel ladite réserve d'énergie (22) comprend un condensateur.

10. Agencement de commande de coussin d'air selon l'une quelconque des revendications précédentes, dans lequel le premier capteur d'accélération (25) est configuré pour utiliser un courant plus faible que le deuxième capteur d'accélération (26).

11. Agencement de commande de coussin d'air selon l'une quelconque des revendications précédentes, dans lequel le premier capteur d'accélération (25) est configuré pour utiliser un courant de 100 pA ou moins.

12. Agencement de commande de coussin d'air selon l'une quelconque des revendications précédentes, dans lequel le premier capteur d'accélération (25) comprend un accéléromètre piézo-électrique.

13. Agencement de commande de coussin d'air selon l'une quelconque des revendications précédentes, dans lequel le premier capteur d'accélération (25) est un capteur passif.

14. Agencement de commande de coussin d'air selon l'une quelconque des revendications précédentes, dans lequel le deuxième capteur d'accélération (26) comprend un accéléromètre micro-électro-mécanique.

15. Agencement de commande de coussin d'air selon l'une quelconque des revendications précédentes, dans lequel ledit circuit de fonction auxiliaire (4) est connecté électriquement à une source primaire (7) d'énergie électrique réalisée dans le véhicule.
